# EUROPEAN PATENT SPECIFICATION

(11) **EP 1 559 538 B1**
(45) Date of publication and mention of the grant of the patent: **10.05.2006**
(21) Application number: 05250358.8
(22) Date of filing: 25.01.2005
(51) Int. Cl.: B32B 1/08, F16L 11/04

(54) **Heat resistant air hose**
Hitzebeständiger Luftschlauch
Tuyau pour le transport d'air résistant à la chaleur

(30) Priority: 29.01.2004 JP 2004021711
(43) Date of publication of application: 03.08.2005
(73) Proprietor: TOKAI RUBBER INDUSTRIES, LTD., Komaki-shi, Aichi-ken, 485-8550 (JP)
(72) Inventor: Noda, Masashi, Komaki-shi aichi-ken 485-8550 (JP); Kanbe, Shinobu, Komaki-shi Aichi-ken 485-8550 (JP); Nishimura, Motohide, Komaki-shi Aichi-ken 485-8550 (JP); Mori, Hiroyoshi, Komaki-shi Aichi-ken 485-8550 (JP)
(74) Representative: Wakerley, Helen Rachael

(56) References cited:
- EP-A- 1 396 670
- EP-A- 1 445 280
- EP-A- 1 507 110
- DE-U1-4202004 014 28
- PATENT ABSTRACTS OF JAPAN vol. 2000, no. 10, 17 November 2000 (2000-11-17) & JP 2000 193152 A (TOYODA GOSEI CO LTD), 14 July 2000 (2000-07-14)
- PATENT ABSTRACTS OF JAPAN vol. 2000, no. 11, 3 January 2001 (2001-01-03) & JP 2000 213670 A (TOKAI RUBBER IND LTD), 2 August 2000 (2000-08-02)
- PATENT ABSTRACTS OF JAPAN vol. 2003, no. 11, 5 November 2003 (2003-11-05) & JP 2003 214565 A (MARUGO RUBBER IND CO LTD), 30 July 2003 (2003-07-30)

## Description

### BACKGROUND OF THE INVENTION

### Field of the Invention

The present invention relates to a heat-resistant air hose for use in automobiles or the like, in particular, a heat-resistant air hose excellent in oil-bleeding resistance.

### Description of the Art

Heretofore, as a material for forming a heat-resistant air hose for use in automobiles or the like, acrylic rubber has been used. Recently, a demand for the heat resistance has been increased and thus silicone rubber is used instead of the acrylic rubber because the silicone rubber is excellent in heat resistance. However, since the silicone rubber is inferior in oil-permeation resistance, there is the problem of "oil-bleeding phenomenon" that oil in a mist form coexisting in air, flowing through the air hose, penetrates the silicone rubber from an interior surface of the air hose and reaches an exterior surface of the air hose. For this reason, a heat-resistant air hose has been proposed which includes a silicone rubber layer formed by materials based on silicone rubber; an inner rubber layer, provided on an inner peripheral surface of the silicone rubber layer, formed by fluorine-containing rubber, blend rubber of fluorine-containing rubber and acrylic rubber, or fluoro-silicone rubber; a reinforcing fiber layer formed on an outer peripheral surface of the silicone rubber layer; and an outer rubber layer of silicone rubber or acrylic rubber on an outer peripheral surface of the reinforcing fiber layer, whereby the oil-bleeding phenomenon is restricted (see, for example, Japanese Unexamined Patent Publication No. 2000-193152).

However, it is necessary that fluorine-containing rubber is formed as an innermost layer for such a heat-resistant air hose as disclosed in the above-mentioned publication to prevent oil-bleeding, and the material cost of the fluorine-containing rubber is very expensive. For this reason, the production cost of such a hose is increased. Further, adhesion between the inner rubber layer of the fluorine-containing rubber and the silicone rubber layer may not be necessarily sufficient, and so interlaminar exfoliation may be caused when used as a heat-resistant air hose, which may cause various further problems. Still further, such a heat-resistant air hose is inferior in low-temperature performance and also is inferior in resistance to an amine compound (amine-resistance) added, for example, as a high-pressure lubricant, viscosity modifier or the like.

In view of the foregoing, it is an object of the present invention to provide a heat-resistant air hose available at low cost and provided with excellent interlaminar adhesion, high durability and excellent oil-bleeding resistance.

### SUMMARY OF THE INVENTION

In accordance with the present invention to achieve the object described above, there is provided a heat-resistant air hose having a laminar structure of an innermost layer formed by silicone rubber and an acrylic rubber layer formed on an outer peripheral surface of the innermost layer, wherein the acrylic rubber layer is formed by a rubber composition comprising the following components (A) to (D) :
(A) an acrylic elastomer;
(B) a peroxide crosslinking agent;
(C) a polyfunctional monomer; and
(D) a thiourea derivative.

The inventors of the present invention have conducted intensive studies for obtaining a hose excellent in heat resistance and oil-bleeding resistance. During their studies, they got the idea that silicone rubber could be used due to its excellent heat-resistance for forming a silicone rubber layer as an innermost layer and also an acrylic rubber layer could be formed on an outer peripheral surface of the silicone rubber layer, so that oil-bleeding could be prevented only by this acrylic rubber layer. However, there is also the problem of interlaminar exfoliation between the silicone rubber layer and the acrylic rubber layer in this case. For this reason, as a result of further studies for solving this problem, the inventors have found that when the above-mentioned acrylic rubber layer was formed by an acrylic rubber composition including a peroxide crosslinking agent, a polyfunctional monomer and a thiourea derivative, such an acrylic rubber layer has improved adhesion with the silicone rubber layer so that the above-mentioned object can be achieved. Thus, the inventors attained the present invention.

As described above, the heat-resistant air hose of the invention has a laminar structure of an innermost layer formed by silicone rubber and an acrylic rubber layer formed on an outer peripheral surface of the silicone rubber layer, and also the acrylic rubber layer is formed by a specific rubber composition, i.e., an acrylic rubber composition including a peroxide crosslinking agent, a polyfunctional monomer and a thiourea derivative. For this reason, the heat-resistant air hose of the invention is excellent both in heat resistance and oil-bleeding resistance due to each property of the above-mentioned two layers, and also has sufficient adhesion therebetween, resulting in extremely excellent reliability in terms of quality. Further, since high-cost materials such as fluorine-containing rubber are not necessary and also an additional layer having an oil-bleeding resistance is not necessary for the heat-resistant air hose of the invention, production cost can be lowered. Still further, since fluorine-containing rubber is not used for forming an innermost layer, there is the effect that problems in terms of low-temperature performance and amine-resistance can be avoided.

Preferably, acrylic ester is present at 70 to 100% by weight, ethylene is present at 0 to 10% by weight and vinyl acetate is present at 0 to 20% by weight, respectively, within the acrylic elastomer as a polymer component of the materials for forming the acrylic rubber layer. The resultant heat-resistant air hose has an excellent balance among heat resistance, oil resistance and cold resistance.

Preferably, the polyfunctional monomer of the materials for forming the acrylic rubber layer is a polyfunctional (meth)acrylic ester. Interlaminar adhesion between the acrylic rubber layer and the silicone rubber layer is thus further improved.

Preferably, phenothiazine is included in the materials for forming the acrylic rubber layer. Anti-scorching property is then improved, so that moldability and interlaminar adhesion are even better.

Still preferably, a silane coupling agent, having a vinyl group or a methacryloxy group, is included in the materials for forming the acrylic rubber layer. Interlaminar adhesion between the acrylic rubber layer and the silicone rubber layer is then further improved.

### BRIEF DESCRIPTION OF THE DRAWING

Fig. 1 is a schematic diagram illustrating the construction of an embodiment of a heat-resistant air hose according to the present invention; and
Fig. 2 is a schematic diagram illustrating an another embodiment of a heat-resistant air hose according to the present invention.

### DESCRIPTION OF THE PREFERRED EMBODIMENTS

Embodiments of the present invention will hereinafter be described in detail.

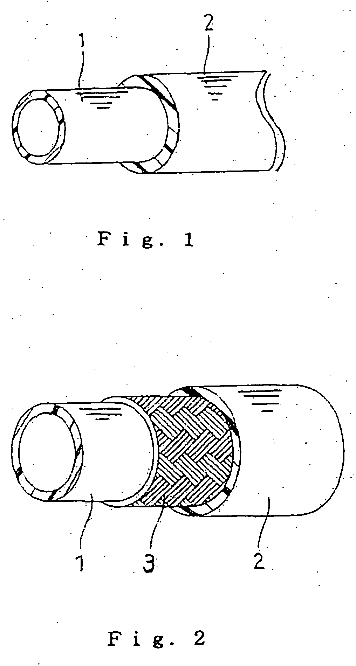

A heat-resistant air hose according to the present invention has a structure, for example, as shown in Fig. 1, of a silicone rubber layer 1 as an innermost layer and an acrylic rubber layer 2 formed directly on an outer peripheral surface of the silicone rubber layer 1 by using an acrylic rubber composition including a specific component. Optionally, the heat-resistant air hose of the invention may have a structure, as shown in Fig. 2, of a silicone rubber layer 1 as an innermost layer, a reinforcing fiber layer 3 formed on an outer peripheral surface of the silicone rubber layer 1, and an acrylic rubber layer 2 further formed on an outer peripheral surface of the reinforcing fiber layer 3. Even though the silicone rubber layer 1 contacts the acrylic rubber layer 2 through texture of the reinforcing fiber layer 3, sufficient adhesion between the silicone rubber layer 1 and the acrylic rubber layer 2, one of characteristic features of the present invention, can be realized in the structure as shown in Fig. 2.

The materials for forming the silicone rubber layer 1 are not specifically limited and conventional materials may be used. Examples thereof include millable silicone rubber, high-temperature vulcanizing silicone rubber (HTV), liquid silicone rubber such as room-temperature vulcanizing silicone rubber (RTV) and low-temperature vulcanizing silicone rubber (LTV), among which millable silicone rubber is preferred.

As the materials for forming the acrylic rubber layer 2 on an outer peripheral surface of the silicone rubber layer 1, an acrylic elastomer (component (A)), a peroxide crosslinking agent (component (B)), a polyfunctional monomer (component (C)) and a thiourea derivative (component (D)) are used as essential components.

The acrylic elastomer (component (A)) is not specifically limited, however, it is preferred that the acrylic ester is present at 70 to 100% by weight, ethylene is present at 0 to 10% by weight and vinyl acetate is present at 0 to 20% by weight, respectively, within the acrylic elastomer. The resultant heat-resistant air hose has an excellent balance among heat resistance, oil resistance and cold resistance. Examples of the acrylic ester include acrylic alkyl esters such as methyl acrylate, ethyl acrylate and n-butyl acrylate; and alkoxy alkyl ester acrylate such as methoxyetbyl acrylate. Further, a crosslinkable monomer may be copolymerized at 0 to 5% by weight in copolymerization of the above-mentioned materials. Examples of the crosslinkable monomers include such monomers as having an active halogen group, an epoxy group, a carboxyl group, a hydrogen group, an amido group and a diene group, among which glycidyl methacrylate and monobutyl ester malate are preferred.

Preferable examples of commercially available acrylic elastomers (component (A)) include, for example, Nipol AR available from ZEON CORPORATION of Tokyo, Japan, NOXTITE available from UNIMATEC CO., LTD. of Tokyo, Japan, DENKA ER available from DENKI KAGAKU KOGYO KABUSHIKI KAISHA of Tokyo, Japan and VAMAC available from Du Pont Kabushiki Kaisha of Tokyo, Japan, which are preferably used.

Examples of the peroxide crosslinking agent (component (B)) used together with the component (A) include peroxy ketals such as 1,1-bis(t-butylperoxy)-3,3,5-trimethyl cyclohexane, 1,1-bis(t-hexylperoxy)-3,3,5-trimethyl cyclohexane, 1,1-bis(t-hexylperoxy)cyclohexane, 1,1-bis(t-butylperoxy)cyclododecane, 1,1-bis(t-butylperoxy) cyclohexane, 2,2-bis(t-butylperoxy)octane, n-butyl-4,4-bis(t-butylperoxy)butane and n-butyl-4,4-bis(t-butylperoxy)valerate; dialkyl peroxides such as di-t-butylperoxide, dicumyl peroxide, t-butyl cumylperoxide, α,α'-bis(t-butylperoxy-m-isopropyl) benzene, α,α'-bis (t-butylperoxy)diisopropylbenzene, 2,5-dimetyl-2,5-di(t-butylperoxy)hexane and 2,5-dimetyl-2,5-bis(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichloro-benzoyl peroxide and m-toluoylperoxide; peroxy esters such as t-butylperoxy acetate, t-butylperoxy isobutylate, t-butylperoxy-2-ethylhexanoate, t-butylperoxylaurylate, t-butyl peroxybenzoate, di-t-butyl peroxyisophthalate, 2,5-dimethyl-2,5-di(benzoyl peroxy)hexane, t-butylperoxy maleic acid, t-butylperoxy isopropylcarbonate and cumylperoxyoctate; and hydro peroxides such as t-butylhydroperoxide, cumene hydroperoxide, diisopropylbenzene hydroperoxide, 2,5-dimethylhexane-2,5-dihydroperoxide and 1,1,3,3-tetramethylbutylperoxide, which may be used either alone or in combination.

The peroxide crosslinking agent (component (B)) is preferably present in a proportion of 0.1 to 10 parts by weight (hereinafter just abbreviated to "parts"), more preferably 0.25 to 5 parts, based on 100 parts of the acrylic elastomer (component (A)). If the proportion of the component (B) is smaller than 0.1 parts, the resulting hose tends to have a low strength because of insufficient crosslinking. If the proportion of the component (B) is greater than 10 parts, the resulting hose tends to have a poor flexibility with high hardness.

Examples of the polyfunctional monomer (component (C)) used together with the above components (A) and (B) include, for example, triallyl cyanurate, triallyl isocyanurate, triallyl trimellitate, trimethylolpropane trimethacrylate, polyethylene glycol diacrylate and polyethylene glycol dimethacrylate, which may be used either alone or in combination. Among them, polyfunctional (meth)acrylic esters such as trimethylolpropane trimethacrylate, polyethylene glycol diacrylate and polyethylene glycol dimethacrylate are preferred, because interlaminar adhesion between the acrylic rubber layer 2 and the silicone rubber layer 1 is further improved.

The polyfunctional monomer (component (C)) is preferably present in a proportion of 0.5 to 15 parts, more preferably 1 to 8 parts, based on 100 parts of the acrylic elastomer (component (A)). If the proportion of the component (C) is smaller than 0.5 parts, the resulting hose tends to have a low strength because of insufficient crosslinking. If the proportion of the component (C) is greater than 15 parts, the resulting hose tends to have a poor flexibility with high hardness.

Examples of the thiourea derivative (component (D)) used together with the above components (A) to (C) include, for example, thiourea, N,N'-diphenylthiourea, diethyl thiourea, dibutyl thiourea, trimethylthiourea, dilauryl thiourea, 2-mercaptobenzoimidazole and zinc salt of 2-mercaptobenzoimidazole, which may be used either alone or in combination. Among them, trimethylthiourea is preferably used.

The thiourea derivative (component (D)) is preferably present in a proportion of 0.1 to 5 parts, more preferably 0.3 to 3 parts, based on 100 parts of the acrylic elastomer (component (A)). If the proportion of the component (D) is smaller than 0.1 parts, the resulting hose tends to have an insufficient heat resistance. If the proportion of the component (D) is greater than 5 parts, bleeding may occur on the acrylic rubber layer of the resulting hose, which may affect product performance of the hose.

When the phenothiazine (optional component (E)) is used together, as required, with the above essential components (A) to (D) for forming the acrylic rubber layer 2 of the heat-resistant air hose of the invention, anti-scorching property, affected by peroxide crosslinking for the acrylic rubber, is improved, so that moldability and interlaminar adhesion are preferably even better.

The phenothiazine (component (E)) is preferably present in a proportion of 0.01 to 5 parts, more preferably 0.1 to 1 part, based on 100 parts of the acrylic elastomer (component (A)). If the proportion of the component (E) is within this range, anti-scorching property is improved.

When the silane coupling agent (optional component (F)) having a vinyl group (CH₂=CH-) or a methacryloxy group [(CH₂=C(CH₃)CO-] is used together, as required, with the above essential components (A) to (D) for forming the acrylic rubber layer 2 of the heat-resistant air hose of the invention, interlaminar adhesion is preferably even better between the acrylic rubber layer 2 and the silicone rubber layer 1. Examples of the silane coupling agent include vinyl-tris (β-methoxyethoxy)silane, vinyltrimethoxysilane, vinyltriethoxysilane, p-styryltrimethoxysilane, 3-methacryloxypropyl methyldimethoxy silane, 3-methacryloxypropyl trimethoxy silane, 3-methacryloxypropyl methyldiethoxy silane and 3-methacryloxypropyl triethoxy silane, which may be used either alone or in combination. The component (F) may be used together with the component (E) without any problem.

The silane coupling agent (component (F)) is preferably present in a proportion of 0.01 to 3 parts, more preferably 0.1 to 1 part, based on 100 parts of the acrylic elastomer (component (A)). If the proportion of the component (F) is within this range, interlaminar adhesion between the acrylic rubber layer 2 and the silicone rubber layer 1 is further improved.

The materials for forming the acrylic rubber layer 2 of the heat-resistant air hose of the invention may further include any of a reinforcing agent, a white filler, a plasticizer, a vulcanizing agent, a vulcanizing accelerator, a process aid, an anti-aging agent, a flame retardant, as required.

Examples of the reinforcing fiber for forming the reinforcing fiber layer 3 between the acrylic rubber layer 2 and the silicone rubber layer 1 include, for example, a vinylon (polyvinyl alcohol) fiber, a polyamide (nylon) fiber, an aramid fiber and polyethylene terephthalate (PET) fiber.

The method for weaving the above-mentioned reinforcing fibers is not specifically limited, however, examples thereof include spiralling, knitting and braiding.

The heat-resistant air hose of the invention, as shown in Fig. 1, is produced, for example, as follows. First of all, a composition for forming the silicone rubber layer 1 is prepared. Then, each material for forming the above components (A) to (D), and other components (E) and (F) and other additives, as required, are prepared and kneaded by means of a kneading machine such as a kneader, a Banbury mixer or a roll mill for preparation of the composition for forming the acrylic rubber layer 2. After molding the composition for forming the silicone rubber layer 1 into a cylindrical shape, and molding the composition for forming the acrylic rubber layer 2 directly onto a peripheral surface of the thus molded silicone rubber layer 1 without applying adhesive thereto (adhesive-less), the resulting mold is vulcanized. Thus, the heat-resistant air hose of the invention having the silicone rubber layer 1 and the acrylic rubber layer 2 formed on an outer peripheral surface of the silicone rubber layer 1 is formed. Alternatively, the heat-resistant air hose of the invention may be produced by co-extruding each layer material.

The heat-resistant air hose of the invention, as shown in Fig. 2, is produced, for example, as follows. The materials for forming each layer are prepared in the same manner as above. After extruding the composition for forming the silicone rubber layer 1 into a cylindrical shape, reinforcing fibers are braided onto an outer peripheral surface of the thus extruded silicone rubber layer 1. Then, the composition for forming the acrylic rubber layer 2 is extruded onto an outer peripheral surface of the reinforcing fibers and each layer is vulcanized. Thus, the heat-resistant air hose of the invention having the silicone rubber layer 1, the reinforcing fiber layer 3 formed on an outer peripheral surface of the silicone rubber layer 1, and the acrylic rubber layer 2 formed on an outer peripheral surface of the reinforcing fiber layer 3 is formed.

In the structures, as shown in Figs. 1 and 2, the acrylic rubber layer 2 becomes the outermost layer. For this reason, when forming the hose of the invention as a curved hose, there is the advantage that flaws or marks caused by handling when inserting an unvulcanized hose into a curved mandrel may hardly be remained on an outer peripheral surface of the hose. However, the heat-resistant air hose of the invention is not limited to the structures, as shown in Figs. 1 and 2, and may, for example, have the structure that a reinforcing layer is formed on an outer peripheral surface of the acrylic layer 2.

The thus produced heat-resistant air hose may generally have an internal diameter of 20 to 100mm, particularly preferably 30 to 70mm. The silicone rubber layer 1 may have a thickness of 0.5 to 20mm, particularly preferably 1 to 10mm. The acrylic rubber layer 2 may have a thickness of 0.5 to 20mm, particularly preferably 1 to 10mm.

The heat-resistant air hose of the invention is used for general hoses requiring heat resistance, and is preferably used as automotive air hoses, such as an air hose for use in a supercharger, through which high-temperature air flows.

Next, an explanation will be given to Examples of the present invention and Comparative Examples.

### Examples 1 to 6, Comparative Examples 1 to 3

First, 100 parts of silicone rubber (KE552B-U available from Shin-Etsu Chemical Co., Ltd. of Tokyo, Japan) and 0.8 parts of a vulcanizing agent (C-23N available from Shin-Etsu Chemical Co. , Ltd.) were mixed for preparation of a silicone rubber composition for forming an inner layer.

Then, the following materials were prepared and each material was blended as shown in the following Tables 1 and 2, and then the resulting blend was kneaded by means of 5-liter kneader for preparation of an acrylic rubber composition for forming an outer layer.

### Acrylic elastomer (i) (component A)

An acrylic elastomer containing n-butyl acrylate at 86% by weight, ethylene at 0.5% by weight, vinyl acetate at 13% by weight and glycidyl methacrylate at 0.5% by weight, available from DENKI KAGAKU KOGYO KABUSHIKI KAISHA of Tokyo, Japan

### Acrylic elastomer (ii) (component A)

An acrylic elastomer containing n-butyl acrylate at 44% by weight, ethylene at 0.5% by weight, ethyl acrylate at 55% by weight and glycidyl methacrylate at 0.5% by weight, available from DENKI KAGAKU KOGYO KABUSHIKI KAISHA of Tokyo, Japan

### Peroxide crosslinking agent (component B)

n-butyl-4,4-bis(t-butylperoxy)valerate (PERHEXA V-40 available from NOF Corporation of Tokyo, Japan)

### Polyfunctional monomer (component C)

Trimethylolpropane trimethacrylate (Hi-cross M available from Seiko Chemical Co., Ltd. of Tokyo, Japan)

### Thiourea derivative (component D)

Trimethylthiourea (NOCCELER TMU available from OUCHISHINKO CHEMICAL INDUSTRIAL CO., LTD. of Tokyo, Japan)

### Phenothiazine (component E)

Phenothiazine available from Seiko Chemical Co., Ltd. of Tokyo, Japan

### Silane coupling agent (component F)

3-methacryloxypropyl methoxy silane (KBM-503 available from Shin-Etsu Chemical Co., Ltd. of Tokyo, Japan)

### Stearic acid

LUNAC S-30 available from Kao Corporation of Tokyo, Japan

### Liquid paraffin

CRYSTOL 70 available from ESSO Petroleum Co. Ltd. of GLASGOW, U.K.

### MAF (Medium Abrasion Furnace) carbon black

SEAST 116 available from Tokai Carbon Co., Ltd. of Tokyo, Japan

### Vulcanizing agent

1,2-dimethyl imidazole available from Shikoku Corp. of Kagawa, Japan

### Anti-aging agent

Naugard 445 available from Crompton Corporation of Connecticut, USA

**TABLE 1**

| (Parts) | | | | | | |
|---|---|---|---|---|---|---|
| | EXAMPLE | | | | | |
| | 1 | 2 | 3 | 4 | 5 | 6 |
| Acrylic elastomer (i) | 100 | 100 | 100 | ― | ― | ― |
| Acrylic elastomer (ii) | ― | ― | ― | 100 | 100 | 100 |
| Peroxide crosslinking agent | 3 | 3 | 3 | 3 | 3 | 3 |
| Polyfunctional monomer | 4 | 4 | 4 | 4 | 4 | 4 |
| Thiourea derivative | 0.5 | 0.5 | 0.5 | 0.5 | 0.5 | 0.5 |
| Phenothiazine | ― | 0.5 | 0.5 | ― | 0.5 | 0.5 |
| Silane coupling agent | ― | ― | 1 | ― | ― | 1 |
| Vulcanizing agent | ― | ― | ― | ― | ― | ― |
| Stearic acid | 1 | 1 | 1 | 1 | 1 | 1 |
| Antioxidant | 2 | 2 | 2 | 2 | 2 | 2 |
| MAF Carbon black | 50 | 50 | 50 | 50 | 50 | 50 |
| Liquid paraffin | 1 | 1 | 1 | 1 | 1 | 1 |

**TABLE 2**

| (Parts) | | | |
|---|---|---|---|
| | Comparative Example | | |
| | 1 | 2 | 3 |
| Acrylic elastomer (i) | 100 | 100 | 100 |
| Acrylic elastomer (ii) | ― | ― | ― |
| Peroxide crosslinking agent | ― | ― | 3 |
| Polyfunctional monomer | ― | ― | 4 |
| Thiourea derivative | 1 | 1 | ― |
| Phenothiazine | ― | ― | ― |
| Silane coupling agent | ― | 1 | ― |
| Vulcanizing agent | 1 | 1 | ― |
| Stearic acid | 1 | 1 | 1 |
| Antioxidant | 2 | 2 | 2 |
| MAF Carbon black | 50 | 50 | 50 |
| Liquid paraffin | 1 | 1 | 1 |

Heat-resistant air hoses, as shown in Fig. 1, each having a silicone rubber layer and an acrylic rubber layer formed onto an outer peripheral surface of the silicone rubber layer were produced by co-extruding the thus preliminarily prepared materials as in the above (each of the silicone rubber composition and the acrylic rubber composition) for forming each layer onto a mandrel, vulcanizing the thus obtained mold at 160°C for one hour by means of steam, secondarily vulcanizing the thus vulcanized mold at 200°C for 4 hours by means of an oven in such a manner that the silicone rubber layer had a thickness of 3mm, the acrylic rubber layer had a thickness of 2mm, the inner diameter was 30mm and the outer diameter was 40mm.

### Comparative Example 4

The same composition for forming the silicone rubber layer as in EXAMPLE 1 was prepared. Only this composition was extruded into a cylindrical shape and vulcanized for production of the single-layer silicone rubber hose having the same dimensions as of the heat-resistant air hose of EXAMPLE 1.

### Comparative Example 5

The same composition for forming the acrylic rubber layer as in EXAMPLE 1 was prepared. Only this composition was extruded into a cylindrical shape and vulcanized for production of the single-layer acrylic rubber hose having the same dimensions as of the heat-resistant air hose of Example 1.

The properties of each of heat-resistant air hoses produced in accordance with the Examples and the Comparative Examples were evaluated in the following manners. The results of the evaluations are shown in the following Tables 3 and 4.

### Oil-bleeding resistance

Each hose was incorporated in an aluminum forging pipe having a straight diameter of 31mm in a bulge shape in accordance with JASO M101 (Japanese Automobile Standard Organization) and was fastened by worm gear clamp at a screw torque of 3N · m in accordance with JASO F207. Diesel engine oil (Grade: 10W-30) heated to 200°C was flowed through the hose and the temperature of the outer peripheral surface of the hose was about 180°C at that time, and then the hose was allowed to stand for 500 hours as it was. Thereafter, the diesel engine oil was withdrawn and the hose was cooled to room temperature. After the thus treated hose was allowed to stand for one week, the state of the oil-bleeding on the outer peripheral surface of the hose (the acrylic rubber surface) was visually evaluated. In Tables 3 and 4, the symbol ○ indicates that no oil-bleeding was identified, while the symbol × indicates that oil-bleeding was identified.

### Heat resistance

Each hose was incorporated in an aluminum forging pipe having a straight diameter of 31mm in a bulge shape in accordance with JASO M101 (Japanese Automobile Standard Organization) and was fastened by worm gear clamp at a screw torque of 3N · m in accordance with JASO F207. Air heated to 200°C was flowed through the hose and the temperature of the outer peripheral surface of the hose was about 180°C at that time, and then the hose was allowed to stand for 500 hours as it was. Thereafter, the hose was cooled to room temperature. The thus treated hose was placed between a couple of plates and was subjected to sudden compression until the inner diameter of the hose was reduced by half. The hose was visually evaluated about whether there were any abnormalities such as crack or cracking. In Tables 3 and 4, the symbol ○ indicates that the hose suffered from no abnormality and the symbol × indicates the hose suffered from abnormalities such as crack or cracking.

### Interlaminar adhesion

A cut of 2.5cm in width was made in a stripe shape along a circumferential direction on the outer peripheral surface of the acrylic rubber layer of the hose. Each stripe was peeled off from the distal end of the acrylic rubber layer at a rate of 50mm per minute by means of a tensile tester in accordance with Japanese Industrial Standards (JIS) B 7721. The peel-off state between the acrylic rubber layer and the silicone rubber layer was visually observed. In Tables 3 and 4, the symbol Ⓞ indicates that peeled surfaces were completely destroyed, the symbol ○ indicates that peeled surfaces were partially destroyed, and the symbol × indicates that the strip was peeled off at an interface. Further, when the strip was peeled off, adhesive strength was measured.

**TABLE 3**

| | EXAMPLE | | | | | |
|---|---|---|---|---|---|---|
| | 1 | 2 | 3 | 4 | 5 | 6 |
| Oil-bleeding resistance | ○ | ○ | ○ | ○ | ○ | ○ |
| Heat resistance | ○ | ○ | ○ | ○ | ○ | ○ |
| Interlaminar adhesion | | | | | | |
| Adhesive strength (N/mm) | 1.7 | 3.2 | 3.7 | 1.2 | 2.5 | 3.1 |
| Evaluation | ○ | Ⓞ | Ⓞ | ○ | Ⓞ | Ⓞ |

**TABLE 4**

| | COMPARATIVE EXAMPLE | | | | |
|---|---|---|---|---|---|
| | 1 | 2 | 3 | 4 | 5 |
| Oil-bleeding resistance | ○ | ○ | ○ | × | ○ |
| Heat resistance | ○ | ○ | ○ | ○ | × |
| Interlaminar adhesion | | | | | |
| Adhesive strength (N/mm) | 0.2 | 0.3 | 0.3 | ― | ― |
| Evaluation | × | × | × | ― | ― |

As can be understood from the results shown in the Tables 3 and 4, each hose of Examples was excellent in heat resistance, interlaminar adhesion and oil-bleeding resistance.

On the other hand, each hose of Comparative Examples 1 and 2 had inferior adhesion between the acrylic rubber layer and the silicone rubber layer because the acrylic rubber layer thereof was each formed by amine vulcanization. The hose of Comparative Example 3 had inferior adhesion between the acrylic rubber layer and the silicone rubber layer because the acrylic rubber layer was not added with a thiourea derivative although the acrylic rubber layer was formed by peroxide crosslinking. The hose of Comparative Example 4 was inferior in oil-bleeding resistance, because the hose was formed only by silicone rubber. The hose of Comparative Example 5 was inferior in heat resistance, because the hose was formed only by acrylic rubber.

## Claims

1. A heat-resistant air hose having a laminar structure of an innermost layer formed by silicone rubber and an acrylic rubber layer formed on an outer peripheral surface of the innermost layer, wherein the acrylic rubber layer is formed by a rubber composition comprising the following components (A) to (D):
(A) an acrylic elastomer;
(B) a peroxide crosslinking agent;
(C) a polyfunctional monomer; and
(D) a thiourea derivative.

2. A heat-resistant air hose as set forth in claim 1, wherein acrylic ester is present at 70 to 100% by weight, ethylene is present at 0 to 10% by weight and vinyl acetate is present at 0 to 20% by weight in the acrylic elastomer.

3. A heat-resistant air hose as set forth in claim 1 or 2, wherein the polyfunctional monomer is a polyfunctional (meth)acrylic ester.

4. A heat-resistant air hose as set forth in any of claims 1 to 3, further comprising the following component (E) :
(E) phenothiazine.

5. A heat-resistant air hose as set forth in any of claims 1 to 4, further comprising the following component (F) :
(F) a silane coupling agent having a vinyl group or a methacryloxy group.

## Patentansprüche

1. Wärmebeständiger Luftschlauch mit einer Laminarstruktur, die aus einer innersten Lage aus Silikonkautschuk und einer Acrylkautschuklage besteht, die auf einer äußeren Umfangsfläche der innersten Lage ausgebildet ist, wobei die Acrylkautschuklage mit einer Kautschukzusammensetzung gebildet wird, die die folgenden Komponenten (A) bis (D) umfasst:
(A) ein Acrylelastomer;
(B) ein Peroxidvernetzungsmittel;
(C) ein polyfunktionelles Monomer und
(D) ein Thioharnstoffderivat.

2. Wärmebeständiger Luftschlauch nach Anspruch 1, wobei Acrylester in einem Gewichtsanteil von 70 bis 100 %, Ethylen in einem Gewichtsanteil von 0 bis 10 % und Vinylacetat in einem Gewichtsanteil von 0 bis 20 % in dem Acrylelastomer vorliegt.

3. Wärmebeständiger Luftschlauch nach Anspruch 1 oder 2, wobei das polyfunktionelle Monomer ein polyfunktioneller (Meth)acrylester ist.

4. Wärmebeständiger Luftschlauch nach einem der Ansprüche 1 bis 3, ferner umfassend die folgende Komponente (E):
(E) Phenothiazin.

5. Wärmebeständiger Luftschlauch nach einem der Ansprüche 1 bis 4, ferner umfassend die folgende Komponente (F):
(F) ein Silanhaftmittel mit einer Vinylgruppe oder einer Methacryloxygruppe.

## Revendications

1. Tuyau d'air résistant à la chaleur comportant une structure stratifiée à couche interne formée par un caoutchouc de silicone et couche de caoutchouc acrylique formée sur une surface périphérique externe de la couche interne, dans lequel la couche de caoutchouc acrylique est formée par une composition de caoutchouc comprenant les composants suivants (A) à (D) :
(A) un élastomère acrylique ;
(B) un agent de réticulation de péroxyde ;
(C) un monomère polyfonctionnel ; et
(D) un dérivé de thio-urée.

2. Tuyau d'air résistant à la chaleur selon la revendication 1, dans lequel un ester acrylique est présent à raison de 70 à 100 % en poids, de l'éthylène est présent à raison de 0 à 10 % en poids et de l'acétate de vinyle est présent à raison de 0 à 20% en poids dans l'élastomère acrylique.

3. Tuyau d'air résistant à la chaleur selon la revendication 1 ou 2, dans lequel le monomère polyfonctionnel est un ester (méth)acrylique polyfonctionnel.

4. Tuyau d'air résistant à la chaleur selon l'une quelconque des revendications 1 à 3, comprenant en outre le composant suivant (E) :
(6) phénothiazine.

5. Tuyau d'air résistant à la chaleur selon l'une quelconque des revendications 1 à 4, comprenant en outre le composant suivant (F) :
(F) un agent de couplage en silane ayant un groupe vinyle ou un groupe méthacryloxy.
